# EUROPÄISCHE PATENTSCHRIFT

(11) **EP 1 356 571 B1**
(45) Veröffentlichungstag und Bekanntmachung des Hinweises auf die Patenterteilung: **13.06.2007**
(21) Anmeldenummer: 02708194.2
(22) Anmeldetag: 01.02.2002
(51) Int. Cl.: H02K 5/04, H02K 1/17, H02K 15/14

(54) **VERFAHREN ZUM HERSTELLEN EINES GEHÄUSES EINES PERMANENTMAGNETISCH ERREGTZEN KLEINMOTORS UND DERARTIGES GEHÄUSE**
METHOD FOR PRODUCING A HOUSING FOR A SMALL-SIZED MOTOR EXCITED BY A PERMANENT MAGNET AND SAID HOUSING
PROCEDE FABRICATION D'UN BOITIER POUR PETIT MOTEUR A EXCITATION PAR AIMANT PERMANENT, ET BOITIER Y RELATIF

(30) Priorität: 02.02.2001 DE 10105225
(43) Veröffentlichungstag der Anmeldung: 29.10.2003
(73) Patentinhaber: WILLY VOIT GMBH & Co., D-66386 St Ingbert (DE)
(72) Erfinder: SCHMITT, Jakob, 66386 St. Ingbert (DE)
(74) Vertreter: Vièl, Christof
(86) Internationale Anmeldenummer: PCT/DE2002/000361
(87) Internationale Veröffentlichungsnummer: WO 2002/061920

(56) Entgegenhaltungen:
- DE-A- 2 810 215
- US-A- 3 131 462

## Beschreibung

Die Erfindung betrifft ein Verfahren zum Herstellen eines Gehäuses eines permanentmagnetisch erregten Kleinmotors, wobei an dem Gehäuse Haltemittel anbringbar sind. Sie betrifft weiterhin ein Gehäuse eines permanentmagnetisch erregten Kleinmotors.

Aus der DE 28 10 215 C3 ist ein Verfahren zum Aufbringen eines zusätzlichen Rückschlusses auf das Gehäuse einer elektrischen Maschine beschrieben, wobei zunächst als Rückschluß unmittelbar um die als Rolldorn dienende zylindrische Wandung der Blechstreifen herumgebogen wird und anschließend zum Festlegen des Rückschlusses die entlang einer Mantellinie einander berührenden Endkanten des Blechstreifens miteinander verbunden werden. Es wird hierbei ein aus zwei übereinanderliegenden, miteinander verbundenen Blechstreifen bestehendes Gehäuse hergestellt, wobei der äußere Blechstreifen in der Regel eine geringere Breite als der innere Blechstreifen aufweist, so daß der innere Blechstreifen oben und unten über den äußeren Blechstreifen hinausragt.

Aufgabe der Erfindung ist es, ein Verfahren zu entwickeln, mit dem derartige Gehäuse hergestellt werden können, die eine größere Leistung des Kleinmotors ermöglichen.

Diese Aufgabe wird erfindungsgemäß durch folgende Verfahrensschritte gelöst:
- Abprägen der beiden Längsränder eines Blechstreifens,
- Zuschneiden des Blechstreifens,
- Rollen des Gehäuses in Längsrichtung des Blechstreifens.

Es hat sich im Rahmen der Erfindung gezeigt, daß durch ein einstückiges Gehäuse die Motorleistung gegenüber dem bekannten zweistückigen Gehäuse (Doppelring) erhöht werden kann. Allerdings wäre bei einem einstückigen Gehäuse, das über die volle Höhe einen einheitlichen Innen- und Außendurchmesser aufweist, die Verwendung der Halteelemente (Lagerbügel) in bisheriger Form nicht mehr möglich, ganz davon abgesehen, daß für die Lagerbügel Ausstanzungen in voller Dicke des Blechstreifens erfolgen müßten, was sowohl einen hohen Werkzeugverschleiß mit sich bringt als auch relativ große Fertigungstoleranzen. Daher werden im Rahmen der Erfindung die Längsränder des Blechstreifens zunächst abgeprägt, d.h. in ihrer Dicke verringert. Somit können bei höherer Motorleistung die gleichen Lagerbügel wie bisher verwendet werden und die hierfür vorgesehenen Ausnehmungen können mit gleicher Fertigungstoleranz wie bisher hergestellt werden. Zudem hat es sich im Rahmen der Erfindung herausgestellt, daß bei der erfindungsgemäßen Vorgehensweise bei Vorliegen beispielsweise einer Sendzimirverzinkung trotz des im Verhältnis zu dem aus dem Stand der Technik bekannten Doppelring dickeren Materials der Korrosionsschutz im Kantenbereich ausreichend ist.

Es liegt im Rahmen der Erfindung, daß bei dem Rollen des Gehäuses der abgeprägte Bereich an der Außenseite des Gehäuses angeordnet ist.

Hierdurch ergibt sich eine Form, die der aus dem Stand der Technik bekannten entspricht.

Es ist allerdings auch möglich, daß bei dem Rollen des Gehäuses der abgeprägte Bereich an der Innenseite des Gehäuses angeordnet ist.

Bei dieser Ausführung kann durch die Abprägung ein Deckel an der Oberseite des Gehäuses eingelegt und befestigt werden.

Eine Ausbildung der Erfindung besteht darin, daß vor dem Abprägen der Längsränder der Blechstreifen vorgeschnitten wird.

Bei dieser Vorgehensweise müssen die Ausnehmungen bzw. Lappen für die Lagerbügel nach dem Abprägen nur noch nachgeschnitten werden.

Es liegt im Rahmen der Erfindung, daß das Abprägen der Längsränder bis auf etwa die Hälfte der Dicke des Blechstreifens erfolgt.

Hierdurch ergibt sich ein Gehäuse, wie es dem aus dem Stand der Technik bekannten im wesentlichen entspricht, nämlich mit einem oberen und einem unteren Bereich, dessen Außendurchmesser um die Hälfte der Dicke des Blechstreifens gegenüber dem Außendurchmesser mit mittleren Bereich reduziert ist.
Es ist zweckmäßig, daß bei dem Zuschneiden an den Querseiten des Blechstreifens ineinandergreifende Verbindungselemente ausgebildet werden.

Hierdurch können die beim Rollen des Gehäuses einander berührenden Querseiten miteinander formschlüssig verklammert werden.

Im Rahmen der Erfindung liegt auch, daß bei dem Zuschneiden an den Längsseiten des Blechstreifens Ausnehmungen bzw. Lappen zum Befestigen von Halteelementen ausgebildet werden.

In diesen Ausnehmungen bzw. an diesen Lappen werden dann die Haltebügel für die Deckel des Gehäuses befestigt.

Im Rahmen der Erfindung liegt auch ein Gehäuse eines permanentmagnetisch erregten Kleinmotors, wobei das Gehäuse einstückig und zylindrisch ausgebildet ist und im oberen und im unteren Bereich bei gleichem Innendurchmesser einen geringeren Außendurchmesser als im mittleren Bereich aufweist.

Dieses Gehäuse entspricht in seiner Form im wesentlichen dem bekannten Gehäuse, allerdings wird durch die einstückige Ausbildung eine höhere Motorleistung möglich, die Fertigungskosten und das Gewicht werden reduziert, ohne daß die Fertigungstoleranzen erhöht werden müßten.

Es ist vorteilhaft, daß das Gehäuse im oberen und im unteren Bereich Ausnehmungen zum Befestigen von Halteelementen aufweist.

Da die Ausnehmungen in den ausgeprägten und somit dünneren Bereichen eingebracht werden, können die gleichen Fertigungstoleranzen wie bei den Gehäusen gemäß dem Stand der Technik beibehalten werden und der Werkzeugverschleiß ist deutlich geringer als bei Ausnehmungen, die sich über die maximale Dicke des Blechstreifens erstrecken.

Im Rahmen der Erfindung liegt auch ein Gehäuse gemäß den Ansprüchen 6 und 7, das durch ein Verfahren gemäß einem der Ansprüche 1 bis 5 hergestellt ist.

Im folgenden wird ein Ausführungsbeispiel der Erfindung anhand von Zeichnungen beschrieben.

Es zeigen
- Fig. 1: das Vorschneiden,
- Fig. 2: das Abprägen,
- Fig. 3: das Fertigschneiden des Blechstreifens,
- Fig. 4: das fertig gerollte Gehäuse in Draufsicht und
- Fig. 5: das fertig gerollte Gehäuse in Seitenansicht.

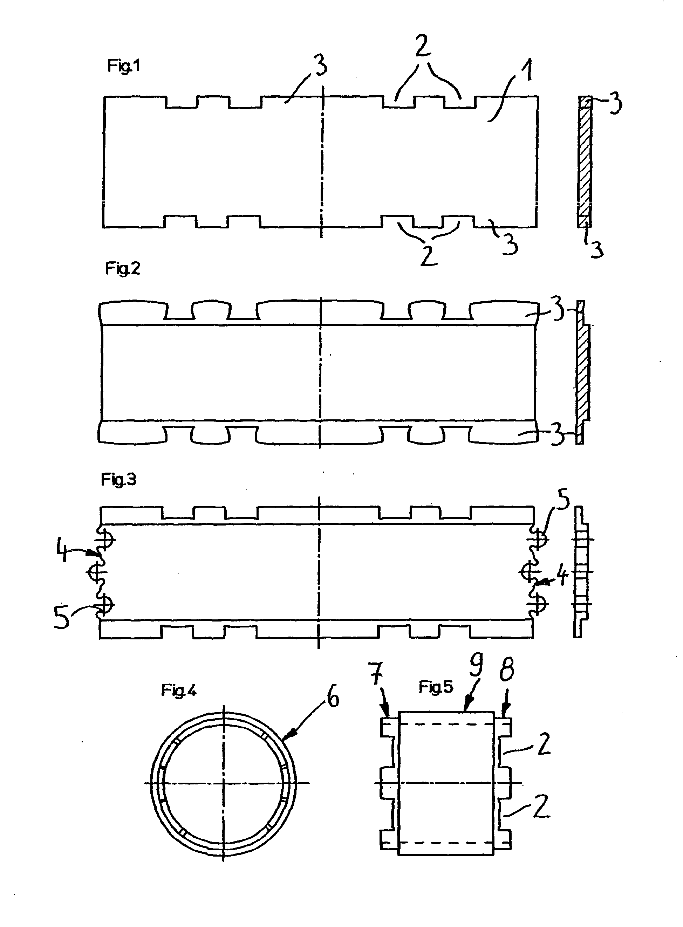

Wie aus Fig. 1 ersichtlich, wird zum Herstellen eines erfindungsgemäßen Gehäuses zunächst ein rechteckiger Blechstreifen 1 vorgeschnitten, d.h. (hier rechteckige) Ausnehmungen 2 für die Befestigung der Lagerbügel in die Längsränder 3 eingebracht bzw. Lappen für die Befestigung der Lagerbügel stehengelassen.

Anschließend werden, wie in Fig. 2 dargestellt, die Längsränder 3 abgeprägt, d.h. der Blechstreifen 1 wird entlang der Längsränder 3 in seiner Dicke um ca. 50 % reduziert.

Um die hierbei enstehenden Verformungen an den im ersten Schritt eingebrachten Ausnehmungen 2 bzw. die Lappen zu korrigieren und um an den Querseiten 4 des Blechstreifens 1 Verbindungselemente 5 auszubilden, welche dann beim Rollen des Blechstreifens 1 formschlüssig ineinandergreifen, wird anschließend (Fig. 3) der Blechstreifen 1 fertiggeschnitten.

Nun kann der Blechstreifen 1 (mit den abgeprägten Längsrändern 3 nach außen) gerollt werden, wobei die Verbindungselemente 5 ineinandergreifen und ein zylindrisches Gehäuse 6 entsteht, wie es in den Fig. 4 und 5 dargestellt ist. Der obere und der untere Bereich 7, 8 des Gehäuses 6 weisen bei gleichem Innendurchmesser gegenüber dem mittleren Bereich 9 einen um die halbe Dicke des Blechstreifens 1 reduzierten Außendurchmesser auf, was einerseits eine Gewichtsersparnis mit sich bringt und andererseits es ermöglicht, die aus dem Stand der Technik bekannten Lagerbügel und Fertigungstoleranzen für die Ausnehmungen 2 bzw. die Lappen zum Befestigen der Lagerbügel beizubehalten.

Alternativ kann auch das Gehäuse 6 so gerollt werden, daß der abgeprägte Bereich 3 an der Innenseite des Gehäuses 6 angeordnet ist, was das Einlegen eines Deckels in den abgeprägten Bereich 3 ermöglicht. Dieser Deckel kann dann beispielsweise durch Bördeln festgelegt werden.

## Patentansprüche

1. Verfahren zum Herstellen eines Gehäuses eines permanentmagnetisch erregten Kleinmotors, wobei an dem Gehäuse Haltemittel anbringbar sind, **gekennzeichnet durch** folgende Verfahrensschritte:
• Abprägen der beiden Längsränder (3) eines Blechstreifens (1),
• Zuschneiden des Blechstreifens (1),
• Rollen des Gehäuses (6) in Längsrichtung des Blechstreifens (1).

2. Verfahren gemäß Anspruch 1, **dadurch gekennzeichnet, daß** bei dem Rollen des Gehäuses (6) der abgeprägte Bereich (3) an der Außenseite des Gehäuses (6) angeordnet ist.

3. Verfahren gemäß Anspruch 1, **dadurch gekennzeichnet, daß** bei dem Rollen des Gehäuses (6) der abgeprägte Bereich (3) an der Innenseite des Gehäuses (6) angeordnet ist.

4. Verfahren gemäß Anspruch 1, **dadurch gekennzeichnet, daß** vor dem Abprägen der Längsränder (3) der Blechstreifen (1) vorgeschnitten wird.

5. Verfahren gemäß Anspruch 1, **dadurch gekennzeichnet, daß** das Abprägen der Längsränder (3) bis auf etwa die Hälfte der Dicke des Blechstreifens (1) erfolgt.

6. Verfahren gemäß Anspruch 1, **dadurch gekennzeichnet, daß** bei dem Zuschneiden an den Querseiten (4) des Blechstreifens (1) ineinandergreifende Verbindungselemente (5) ausgebildet werden.

7. Verfahren gemäß Anspruch 1, **dadurch gekennzeichnet, daß** bei dem Zuschneiden an den Längsseiten (3) des Blechstreifens (1) Ausnehmungen (2) bzw. Lappen zum Befestigen von Halteelementen ausgebildet werden.

8. Gehäuse eines permanentmagnetisch erregten Kleinmotors, **dadurch gekennzeichnet, daß** das Gehäuse (6) einstückig und zylindrisch ausgebildet ist und im oberen und im unteren Bereich (7, 8) bei gleichem Innendurchmesser einen geringeren Außendurchmesser als im mittleren Bereich (9) aufweist.

9. Gehäuse gemäß Anspruch 8, **dadurch gekennzeichnet, daß** das Gehäuse (6) im oberen und im unteren Bereich (7, 8) Ausnehmungen (2) zum Befestigen von Halteelementen aufweist.

10. Gehäuse gemäß einem der Ansprüche 8 oder 9, **dadurch gekennzeichnet, daß** es durch ein Verfahren gemäß einem der Ansprüche 1 bis 7 hergestellt ist.

## Claims

1. A method of manufacturing a housing for a small electric motor energized by a permanent magnet, retaining means being attachable to said housing, and said method being **characterised by** the following steps:
• Stamping of the two longitudinal edges (3) of a sheet-metal strip (1),
• Cutting the sheet-metal strip (1) to size,
• Rolling up the housing (6) in the longitundinal direction of the sheet-metal strip (1).

2. A method as defined in claim 1, **characterised in that** the housing (6) is rolled up with the stamped area (3) on the outside of the housing (6).

3. A method as defined in claim 1, **characterised in that** the housing (6) is rolled up with the stamped area (3) on the inside of the housing (6).

4. A method as defined in claim 1, **characterised in that** the sheet-metal strip (1) is pre-cut to size before the longitudinal edges (3) are stamped.

5. A method as defined in claim 1, **characterised in that** the longitudinal edges (3) are stamped to a thickness which is about half that of the sheet-metal strip (1).

6. A method as defined in claim 1, **characterised in that** during the process of cutting the sheet-metal strip (1) to size, interlocking connection elements (5) are created at the ends (4) of the strip (1).

7. A method as defined in claim 1, **characterised in that** during the process of cutting the sheet-metal strip (1) to size, recesses (2) and tabs for the securing of retaining elements are created along the longitudinal edges (3) of the strip (1).

8. A housing for a small electric motor energized by a permanent magnet, **characterised in that** the housing (6) is configured cylindrically in one piece, and has a smaller external diameter in the top and bottom portions (7, 8) than in the middle portion (9) but the same internal diameter throughout.

9. A housing as defined in claim 8, **characterised in that,** in its upper and lower portions (7, 8), the housing (6) has recesses (2) for the securing of retaining elements.

10. A housing as defined in one of the claims 8 or 9, **characterised in that** it is manufactured by means of a method as defined in one of the claims 1 to 7.

## Revendications

1. Procédé pour la fabrication d'un boîtier d'un petit moteur excité par un aimant permanent, des moyens de fixation pouvant être placés sur le boîtier, **caractérisé par** les étapes de procédé suivantes :
- enfoncement par estampage des deux bords longitudinaux (3) d'une bande de tôle (1),
- coupe de la bande de tôle (1),
- enroulage du boîtier (6) dans la direction longitudinale de la bande de tôle (1).

2. Procédé selon la revendication 1, **caractérisé en ce que** lors de l'enroulage du boîtier (6) la zone enfoncée par estampage (3) est disposée sur la face extérieure du boîtier (6).

3. Procédé selon la revendication 1, **caractérisé en ce que** lors de l'enroulage du boîtier (6) la zone enfoncée par estampage (3) est disposée sur la face interne du boîtier (6).

4. Procédé selon la revendication 1, **caractérisé en ce que** la bande de tôle (1) est prédécoupée avant l'enfoncement par estampage des bords latéraux (3).

5. Procédé selon la revendication 1, **caractérisé en ce que** l'enfoncement par estampage des bords latéraux (3) est réalisé jusqu'à environ la moitié de l'épaisseur de la bande de tôle (1).

6. Procédé selon la revendication 1, **caractérisé en ce que** des éléments de liaison s'interpénétrant sont réalisés lors de la coupe des bords transversaux (4) de la bande de tôle (1).

7. Procédé selon la revendication 1, **caractérisé en ce que** des évidement (2) ou des languettes pour la fixation d'éléments de fixation sont formés sur les bords latéraux (3) de la bande de tôle (1) lors de la coupe.

8. Boîtier d'un petit moteur excité par un aimant permanent, **caractérisé en ce que** le boîtier (6) est formé en une seule pièce et de façon cylindrique et présente dans la zone supérieure et dans la zone inférieure (7, 8) un diamètre extérieur inférieur à celui de la zone centrale (9) tout en ayant le même diamètre intérieur.

9. Boîtier selon la revendication 8, **caractérisé en ce que** le boîtier (6) est muni dans la zone supérieure et dans la zone inférieure (7, 8) d'évidements (2) pour la fixation d'élément de fixation.

10. Boîtier selon l'une des revendications 8 ou 9, **caractérisé en ce qu'**il est fabriqué par un procédé conforme à l'une des revendications 1 à 7.
